# FASCICULE DE BREVET EUROPEEN

(11) **EP 2 220 751 B1**
(45) Date de publication et mention de la délivrance du brevet: **15.05.2019**
(21) Numéro de dépôt: 08864396.0
(22) Date de dépôt: 17.12.2008
(51) Int. Cl.: F02N 11/04, F02N 15/00, H02K 5/14, H02K 5/173, H02K 9/06, H02K 11/215, H02K 29/08

(54) **MACHINE ELECTRIQUE TOURNANTE EQUIPEE DE MOYENS DE DETERMINATION DE LA POSITION ANGULAIRE DU ROTOR**
ELEKTRISCHE ROTATIONSMASCHINE MIT VORRICHTUNG ZUR BESTIMMUNG DER WINKELPOSITION DES ROTORS
ROTARY ELECTRIC MACHINE INCLUDING MEANS FOR DETERMINING THE ANGULAR POSITION OF THE ROTOR

(30) Priorité: 19.12.2007 FR 0760007; 19.12.2007 FR 0759998
(43) Date de publication de la demande: 25.08.2010
(73) Titulaire: Valeo Equipements Electriques Moteur, 94046 Créteil Cedex (FR)
(72) Inventeur: LEROY, Virginie, F-93330 Neuilly sur Marne (FR)
(74) Mandataire: de Lambilly Delorme, Marie Pierre
(86) Numéro de dépôt international: PCT/FR2008/052330
(87) Numéro de publication internationale: WO 2009/081033

(56) Documents cités:
- EP-A2- 0 980 081
- EP-A2- 1 296 144
- DE-A1- 4 303 480
- FR-A- 2 857 171
- FR-A- 2 884 367
- JP-A- 9 065 620
- US-A1- 2002 183 427

## Description

### DOMAINE TECHNIQUE DE L'INVENTION

L'invention se rapporte à une machine électrique tournante, notamment un alterno-démarreur pour véhicule automobile, équipée d'une cible réalisée en un matériau magnétique de manière qu'au moins un capteur associé de la machine électrique tournante soit apte à déterminer la position angulaire du rotor.

L'invention se rapporte plus particulièrement à une machine électrique tournante, notamment un alterno-démarreur pour un véhicule telle que définie dans le préambule de la revendication 1.

### ETAT DE LA TECHNIQUE

Les machines électriques tournantes comportent principalement un rotor qui est monté tournant à l'intérieur d'un stator bobiné associé. Le stator est agencé dans un carter fixe en étant solidaire de celui-ci. Le rotor est solidaire en rotation d'un arbre monté rotatif dans le carter fixe.

Des machines de ce type sont connues de l'état de la technique, et notamment de la demande de brevet WO-A-01/69.762. Dans ce document, la machine électrique tournante est un alternateur réversible, appelé alterno-démarreur, qui est apte à être utilisé dans un véhicule automobile à moteur thermique, d'une part, comme générateur électrique, et, d'autre part, comme moteur électrique notamment pour le démarrage du moteur thermique du véhicule.

Cette machine électrique tournante est équipée de moyens de suivi de la position angulaire du rotor. Ces moyens permettent de déterminer la position angulaire du rotor par rapport au carter et donc par rapport au stator bobiné pour notamment injecter du courant dans le stator bobiné au bon moment lorsque la machine électrique tournante fonctionne en mode moteur électrique. Ces moyens de suivi comporte au moins un capteur porté par le carter et une cible montée sur un porte-cible, qui comporte une jante et est lié en rotation au rotor ou à un ventilateur fixé sur le rotor. Cette cible comporte un élément magnétique périphérique, qui est portée par la jante du porte-cible.

Le porte-cible est traversé par l'arbre du rotor et est, dans un mode de réalisation lié en rotation au rotor par coopération de formes avec le ventilateur solidaire du rotor.

En variante, le porte-cible est réalisé venu de matière avec le ventilateur.

Le document FR-A-2.884.367 qui décrit une machine suivant le préambule de la revendication 1, propose aussi une conception dans laquelle le porte-cible est fixé à la bague intérieure d'un roulement à billes par l'intermédiaire duquel l'arbre central est monté à rotation dans le carter.

Il est connu de réaliser la cible en un matériau appelé plasto-aimant. Ce plasto-aimant, de forme annulaire, est en matière plastique chargé de particules magnétiques comme des ferrites ou des terres rares. Ce plasto-aimant confère une bonne résistance de la cible aux contraintes produites par le fonctionnement d'une telle machine tournante. Il est fixé par collage sur le porte-cible.

Il est connu de réaliser une pièce de maintien en matériau plastique qui est surmoulée autour de la cible et du porte-cible pour la fixation de la cible sur le porte-cible.

Cependant, la fixation de la cible sur le porte-cible requiert de nombreuses opérations qui s'avèrent onéreuses.

Le document US 2002/0183427 décrit une cible en élasto-aimant. Dans le document EP 0 980 081 la cible en plastoaimant est fixée frontalement sur un porte-cible dépourvu de jante et doté pour ce faire de pattes d'ancrage dans le plastoaiment.

Dans le document EP 1 296 144 la cible est en matériau fritté et est associé à un roulement.

Dans tous les cas il est souhaitable d'améliorer la tenue mécanique de la cible sur son porte-cible.

### RESUME DE L'INVENTION

Pour remédier notamment à ces problèmes et répondre à ce souhait, la présente invention propose une machine telle que définie dans la revendication 1.

Des formes de réalisation avantageuses de l'invention sont décrites dans les revendications dépendantes.

### DESCRIPTION DES FIGURES

- la figure 1 est une vue en demi-coupe axiale qui représente une machine électrique tournante réalisée selon les enseignements de l'invention;
- la figure 2 est une vue partielle en demi-coupe axiale perpendiculaire au plan de coupe de la figure 1, qui représente le raccordement des fils de connexion du bobinage de rotor de la machine électrique tournante de la figure 1 à des bagues collectrices associées, ainsi qu'un suivant un exemple de réalisation.
- la figure 3 est une vue en perspective qui représente le porte-cible de la figure 1 réalisé selon un mode de réalisation de l'invention ;
- la figure 4 est une vue en coupe selon le plan de coupe 4-4 de la figure 3 ;
- la figure 5 est une vue en perspective qui représente un exemple de porte-cible;
- la figure 6 est une vue en coupe selon la plan de coupe 6-6 de la figure 5 ;
- la figure 7 est une vue partielle de détail en demi-coupe axiale d'un exemple de porte-cible;
- la figure 8 est une vue en perspective qui représente un exemple de porte-cible;
- la figure 9 est une vue en coupe selon le plan de coupe 9-9 de la figure 8.

### DESCRIPTION DETAILLEE DES DIVERS MODES DE REALISATION

Dans la suite de la description, des éléments ayant des fonctions identiques, analogues ou similaires seront désignés par des mêmes numéros de référence.

Afin de faciliter la compréhension de la description et des revendications, on utilisera, à titre non limitatif, une orientation axiale dirigée d'arrière en avant qui est indiquée par la flèche "A" des figures et qui est parallèle à l'axe de rotation "B" de l'arbre central, et une orientation radiale dirigée de l'intérieur vers l'extérieur depuis l'axe de rotation "B" de l'arbre central perpendiculairement à l'orientation axiale "A", et qui est indiquée par la flèche "R".

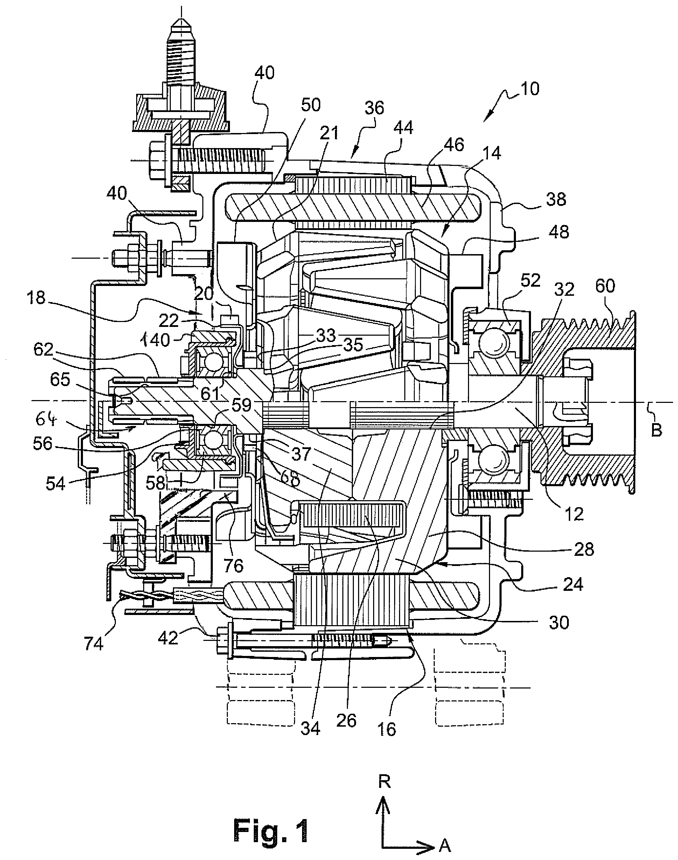

On a représenté à la figure 1 une machine électrique tournante 10 sous la forme d'un alternateur pour véhicule automobile fonctionnant de manière réversible. Un tel alternateur est appelé alterno-démarreur et comprend un arbre central 12 rotatif, un rotor 14 solidaire en rotation de l'arbre central 12, un stator 16 polyphasé fixe entourant le rotor 14, et des moyens 18, dits moyens suivi, pour déterminer la position angulaire du rotor 14 afin d'injecter du courant au bon moment dans le stator bobiné lorsque l'alterno-démarreur fonctionne en mode moteur électrique.

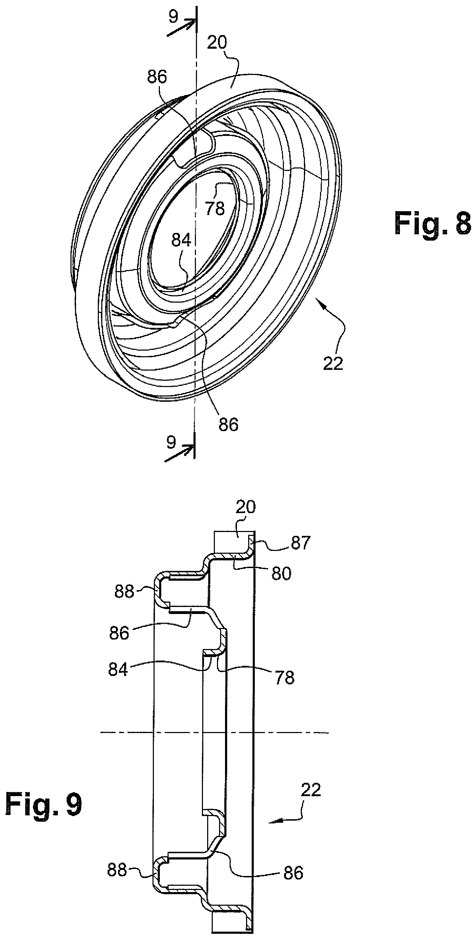

Cette figure 1 correspond au mode de réalisation de la figure 8 du document WO 01/ 69 762, dans lequel on a remplacé les moyens de suivi par les moyens de suivi selon l'invention.

Ces moyens 18 comportent, de manière décrite ci-après, au moins une cible rotative 20 associée à au moins à un capteur fixe 76 solidaire d'un carter fixe 36 pour déterminer la position angulaire du rotor 14 par rapport au carter et au stator 16 bobiné solidaire du carter.

Pour plus de précisions on se reportera à ce document

Dans cette figure 1 l'arbre central 12 est monté rotatif autour de son axe "B". L'axe "B" définit l'axe de rotation de la machine électrique tournante 10, ici du type polyphasé.

Le rotor 14 est solidaire en rotation de l'arbre central 12 et forme avec celui-ci un ensemble rotorique tournant.

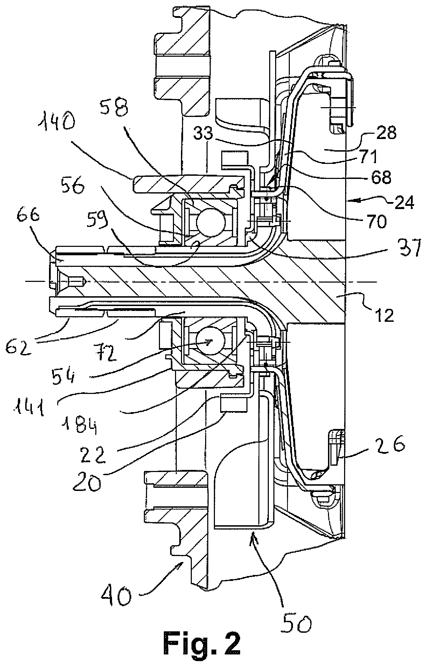

Comme mieux visible aux figures 2 à 4 les moyens 18 de détermination de la position angulaire comportent une cible 20 portée par un porte-cible 22. Dans l'exemple représenté aux figures, la cible 20 est formée par un élément émettant un champ magnétique.

Le rotor 14 est un rotor à griffes, qui comprend deux roues polaires 24 à griffes et un bobinage de rotor 26 agencé axialement entre les roues polaires 24. Chaque roue polaire 24 comporte un flasque 28 s'étendant radialement autour de l'arbre central 12 et portant à sa périphérie extérieure des griffes 30.

Les griffes 30 comprennent des saillies radiales issues du flasque concerné 28 et prolongées à leur périphérie externe par des dents d'orientation axiale dirigées vers le flasque 28 de l'autre roue polaire 24.

Chaque dent d'une griffe 30 présente une forme trapézoïdale. Les griffes 30 d'une roue polaire 24 sont imbriquées circonférentiellement entre les griffes 30 de l'autre roue polaire 24. Un entrefer existe entre la périphérie interne du stator 16 et la périphérie externe du rotor 14 constituée par la périphérie externe des dents des griffes 30.

Les flasques 28 sont percés chacun d'un alésage central de passage de l'arbre central 12. Les flasques 28 sont solidarisés en rotation à l'arbre central 12 par emmanchement à force de tronçons 32 striés axialement de l'arbre central 12 dans l'alésage central des flasques 28 des roues polaires 24.

Pour permettre un positionnement axial précis du rotor 14 sur l'arbre central 12, une face radiale d'extrémité arrière 33 du flasque 28 de la roue polaire 24 arrière est agencée en butée axiale contre une première face radiale d'épaulement 35 de l'arbre central 12. La première face d'épaulement 35 est plus particulièrement portée par un tronçon intermédiaire 37 de l'arbre central 12 présentant un diamètre supérieur au diamètre du tronçon strié 32 adjacent. Le tronçon intermédiaire 37 forme plus particulièrement un collet 37 comme cela est représenté plus en détail à la figure 2.

La face 33 appartient à un dégagement de matière que présente la roue polaire arrière à sa périphérie interne. Ce dégagement (non référencé) est ici en forme de chambrage cylindrique délimité par la face 33, d'orientation radiale, et par une face ici inclinée axialement, en variante d'orientation axiale, se raccordant à la face d'extrémité arrière du flasque 28 de la roue polaire arrière 24.

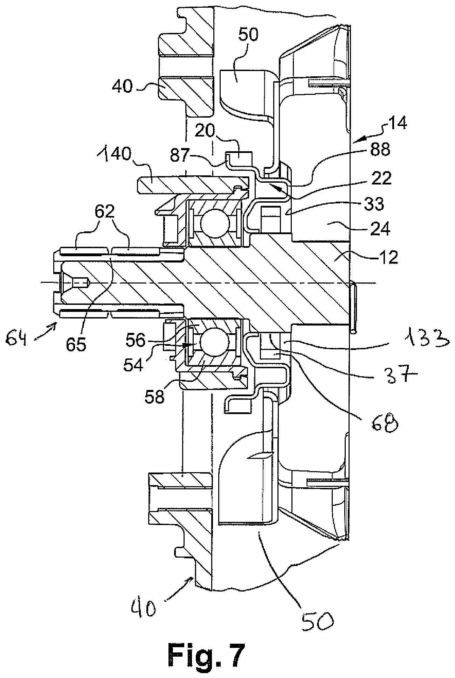

Suivant une caractéristique, il est tiré partie de ce chambrage annulaire, mieux visible en 133 à la figure 7, pour réduire l'encombrement axial de la machine électrique tournante et implanter au moins en partie un anneau appartenant à un collecteur 64 décrit ci-après.

Bien entendu en variante le chambrage est supprimé et la face 33 est confondue avec la face arrière de la roue polaire arrière 24. Dans ce cas la longueur de la machine est augmentée.

Un noyau 34, réalisé par exemple en fer doux, est interposé axialement entre les flasques 28 des roues polaires 24. Un bobinage de rotor 26 est agencé autour du noyau 34. Le noyau 34 est ici réalisé en deux tronçons qui sont chacun réalisés venus de matière avec le flasque 28 d'une roue polaire 24 associée.

Lorsque le bobinage de rotor 26, formant bobinage d'excitation, est alimenté électriquement, les griffes 30 de l'une des roues polaires 24 définissent des pôles magnétiques "Nord", tandis que les griffes 30 de l'autre roue polaire 24 définissent des pôles magnétiques "Sud".

Le stator 16 est porté, de manière précité, par un carter 36 fixe qui renferme le stator 16 et le rotor 14. Le carter 36 comprend au moins deux flasques appelés respectivement palier avant 38 et palier arrière 40. Ces paliers 38, 40 sont refermés l'un sur l'autre et fixés l'un avec l'autre ici avec des tirants dont l'un est visible et est référencé en 42 à la figure 1.

Le stator 16 comporte un corps de stator 44 annulaire coaxial à l'arbre central 12 et portant un jeu de bobinages statoriques 46.

Le corps de stator 44 du stator 16 est solidaire du carter 36 fixe et est porté intérieurement par celui-ci. Ici par simplicité les paliers 38, 40 n'ont pas été représentés en coupe mais en section.

De manière connue, le corps de stator 44 est réalisé en un paquet de tôles empilées axialement dans lequel sont ménagées une série d'encoches axiales contenant des enroulements des bobinages statoriques 46 à raison d'au moins un enroulement par phase que comporte l'alterno-démarreur, ici du type triphasé, en variante du type hexaphasé ou septaphasé.

Les enroulements peuvent être du type à bobines séparées, à bobines enchevêtrées ou du type à barres par exemple en forme de "U" comme décrit dans le document WO-A-92/06527.

Les paliers 38 et 40 de forme creuse sont ajourés pour la circulation de l'air à l'intérieur de la machine électrique tournante 10 du type compact et à ventilation interne, le rotor 14 portant ici à chacune de ses extrémités axiales respectivement un ventilateur avant 48 et arrière 50 coaxiaux à l'arbre central 12.

Ici les ventilateurs sont à action centrifuge.

Pour plus de précisions sur la forme des ouvertures des paliers 38, 40 on se reportera au document WO 01/69762 précité. A la figure 2 on voit une ouverture d'entrée d'air, circonférentiellement de forme oblongue, ménagée dans le fond du palier arrière 40.

Le ventilateur arrière 50 est plus puissant que le ventilateur avant 48. En variante seul le ventilateur arrière 50 est prévu.

Les ventilateurs 48, 50 sont de forme annulaire et comportent chacun un flasque (non référencé) fixé à la roue polaire 24 concernée du rotor 14, par exemple par des points de soudage, en variante par sertissage ou vissage. Les ventilateurs 48, 50 sont ainsi solidaires en rotation de l'arbre central 12 via le rotor 14. Les ventilateurs 48, 50 sont ici métalliques pour mieux évacuer la chaleur. Les flasques des ventilateurs sont munis à leur périphérie externe de pales (non référencées).

Chaque palier 38, 40, ici en aluminium, du carter 36 fixe comporte centralement un logement pour un palier de roulement qui est ici formé par un roulement à billes 52, 54 pour le montage rotatif de l'arbre central 12 du rotor 14.

Ces roulements à billes avant 52 et arrière 54 supportent respectivement un tronçon d'extrémité avant et un tronçon d'extrémité arrière de l'arbre central 12 et sont ici à une seule rangée de billes implantés entre une bague intérieure 56 tournante et une bague extérieure 58 fixe par rapport au logement associé du carter 36.

Plus particulièrement la bague intérieure 56 du roulement à billes arrière 54 est montée serrée sur un tronçon de l'arbre central 12 formant portée de roulement 59.

La portée de roulement 59 est agencée en arrière du collet 37, et elle présente un diamètre inférieur à celui du collet 37. Ainsi, la portée de roulement 59 est délimitée vers l'avant par une deuxième face radiale arrière d'épaulement 61 du collet 37.

Le fond du palier 40 est doté d'une douille 140 pour montage de la bague externe 58 du roulement 54 avec interposition d'une capsule 141 en matière plastique entre la périphérie interne de la douille 140 et la périphérie externe de la bague 58. La capsule permet de caler axialement la bague 58 et d'absorber les phénomènes de dilatation. Cette capsule 141 est montée, de manière connue, par encliquetage sur la douille 140

L'arbre central 12 se prolonge au-delà du palier avant 38, pour porter un organe de transmission de mouvement 60 sous la forme d'une poulie fixée, ici à l'aide d'un écrou non référencé, sur l'arbre central 12 à l'extérieur dudit palier avant 38. Cette poulie 60, solidaire en rotation de l'arbre central 12, est destinée à coopérer avec une courroie à rainures en "V" (non représentée) par laquelle le moteur thermique du véhicule automobile entraîne l'arbre central 12 et l'ensemble du rotor 14 lorsque la machine électrique tournante 10 fonctionne en mode générateur.

Inversement, cette poulie 60 et la courroie, qui lui est associée, permettent aussi à la machine électrique tournante 10 d'entraîner le moteur thermique du véhicule, lorsque ladite machine électrique tournante 10 fonctionne en mode moteur électrique, notamment en mode démarreur pour démarrer le moteur du véhicule.

La transmission de mouvement entre l'arbre central 12 et le moteur thermique du véhicule en variante peut comporter des engrenages, au moins une chaîne des poulies à écartement variable et/ou au moins une courroie. Ainsi l'organe de transmission de mouvement 60 peut avoir de nombreuses configurations et consister en un engrenage, en une roue dentée, en une poulie, etc.

Les extrémités du bobinage de rotor 26 sont reliées chacune, comme mieux visible à la figure 2, par une liaison filaire 71 à des bagues collectrices 62 portées par l'extrémité arrière de l'arbre central 12 à l'extérieur du carter 36.

Pour ce faire l'extrémité arrière de l'arbre central 12 est de plus petite taille que l'extrémité avant de l'arbre central 12.

Les bagues 62, ici en cuivre , appartiennent à un collecteur rapporté 64 du type de celui décrit dans le document FR 2 710 199 , auquel on se reportera pour plus de précisions.

Ainsi, comme mieux visible aux figures 1 et 2, le collecteur 64 comporte un corps cylindrique 66 tubulaire d'extrémité arrière, portant les bagues collectrices 62, et un anneau 68 d'extrémité avant, qui porte des moyens 70 de connexion électrique du bobinage de rotor 26 avec les bagues collectrices 62.

Le corps 66 est emmanché à force sur un tronçon d'extrémité arrière 65 de l'arbre 12 qui présente un diamètre inférieur à celui de la portée de roulement 59 de manière que la face cylindrique extérieure des bagues 62 affleurent sensiblement à la face cylindrique extérieure de la portée 59.

L'anneau 68 est agencé autour du collet 37, à proximité, voire au contact, de la face radiale d'extrémité 33 de la roue polaire 24. Ainsi, les fils d'extrémité 71 du bobinage de rotor 26 peuvent être fixés aux moyens de connexion 70 de l'anneau 68 du collecteur 64 en descendant radialement le long de la face radiale d'extrémité arrière du flasque 28 de la roue polaire 24.

Plus précisément cette face radiale d'extrémité arrière du flasque 28 est dotée d'entailles (non référencées) formant de passages (non référencés) pour les fils d'extrémités 71. Ces entailles débouchent au niveau de cette face 33 du chambrage précité.

Les entailles débouchent dans l'alésage central du ventilateur arrière 50 délimité par un collet d'orientation axiale dirigé vers le roulement 54.

L'anneau cylindrique 68 est relié mécaniquement au corps cylindrique 66 par l'intermédiaire de deux bras 72 diamétralement opposés. Une languette électriquement conductrice est noyée dans chaque bras 72 pour réaliser la connexion électrique entre les moyens de connexion 70 et les bagues collectrices 62. Ainsi, chaque bague collectrice 62 est connectée électriquement à un fil d'extrémité 71 associé du bobinage de rotor 26. Les bras 72 assurent donc également une liaison électrique.

Les bras 72 sont agencés dans des rainures axiales diamétralement opposées réalisées dans la portée de roulement 59 et qui se prolongent dans au moins une portion arrière du collet 37 de l'arbre 12, comme illustré à la figure 2. Ainsi les bras 72 comportent une partie axiale montée dans une rainure axiale de l'arbre 12 et raccordée à l'anneau 68 monté à l'arrière du roulement 54. Cette partie axiale est prolongée par une partie courbe de raccordement à l'anneau 68, Lorsque le collecteur 64 est monté sur l'arbre central 12, les bras 72 ne dépassent pas radialement des rainures axiales de manière à ne pas interférer avec la bague intérieure 56 du roulement à billes arrière 54.

L'anneau 68, les bras 72 et le corps 66 sont en matière plastique, tandis que les moyens de connexion 70 consistent en des pattes électriquement conductrices de pinçage des fils 71.

Pour plus de détails on se reportera au document FR-A-2.710.199, notamment aux figures 1, 7, 8 et 9 de celui-ci.

Les bobinages statoriques 46 sont quant à eux reliés par une liaison à câbles et connecteurs à un étage de puissance d'un dispositif électronique de gestion et de commande, non représenté, disposé à l'extérieur de la machine électrique tournante 10.

On voit à la figure 1 l'une des sorties 74 des bobinages 46 traversant une ouverture du fond du palier arrière 40.

En variante l'étage de puissance du module de gestion et de commande est porté par le palier arrière 40 de l'alterno-démarreur.

Ici la machine électrique tournante 10 est, de manière précitée, du type de celle décrite dans le document WO-A-01/69.762 auquel on se reportera.

La cible 20 annulaire, des moyens 18 de suivi, pour détermination de la position angulaire du rotor 14, présente une forme annulaire entourant l'arbre central 12 et elle est solidaire en rotation de cet arbre central 12. La cible 20 est ici du type magnétique et est formée par un anneau contenant au moins un aimant permanent.

La cible 20 s'étend dans un plan radial perpendiculaire à l'arbre central 12, est centrée sur l'arbre central 12 et est agencée d'un côté axial arrière du rotor 14.

La cible 20 s'étend dans ce mode de réalisation sensiblement autour de la bague extérieure 58 du roulement à billes arrière 54, à l'intérieur du palier arrière 40 et du carter 36.

La cible 20 entoure l'extrémité axiale avant de la douille 140 et de la bague 58 montée à l'intérieur de la douille 140.

La structure et le montage du porte-cible 22 seront décrits plus en détails dans la suite de la description.

Au moins un capteur 76 fixe est disposé à proximité de la cible 20 et coopère avec celle-ci pour lecture de la cible 20.

Ici un entrefer radial existe entre la périphérie externe de la cible 20 et ce capteur 78. La lecture de la cible 20 est donc radiale dans ce mode de réalisation.

Dans le mode de réalisation de la figure 1 il est prévu plusieurs capteurs 78. Ces capteurs 78 sont montés sur un porte-capteurs 176 du type de celui des figures 7 à 9 du document WO 01/69762 précité.

Le porte-capteurs 176, à l'extérieur du palier arrière 40, est donc centré sur la périphérie interne de l'extrémité axiale arrière de la douille 140 et comporte des oreilles à fentes de forme oblongue pour sont réglage angulaire par rapport au palier arrière 40.

Le porte-capteurs 176 comporte un secteur angulaire, non référencé à la figure 1, traversant à jeu circonférentiel une ouverture du fond du palier arrière 40.

Ce secteur porte à son extrémité avant, située dans le palier arrière 40, trois capteurs 76 pour lecture de la cible 20.

Les moyens 18 comprennent typiquement trois capteurs 76, de type à effet Hall dont un seul est visible à la figure 1.

Les capteurs 76 sont donc, après réglage angulaire du porte-capteurs 176, montés fixes sur le palier arrière 40 du carter 36, à l'intérieur de ce palier arrière 40. Ces capteurs 76 sont montés sur un porte-capteurs 176 disposé du côté du palier arrière 40 opposé au rotor 14.

Sous l'effet de la rotation de la cible 20 conjointement avec l'arbre 12, le champ magnétique est reçu par chaque capteur 76 varie. Ces capteurs 76 sont reliés au dispositif électronique de gestion et de commande, et transmettent à celui-ci des signaux qui sont fonctions des champs magnétiques reçus, ce dispositif traitant lesdits signaux pour en déduire la position angulaire du rotor 14.

Le dispositif électronique de gestion et de commande est du type décrit dans le document FR-A-2.745.444, et comprend un étage de puissance doté d'un onduleur, par exemple à transistors du type MOSFET, constituant un convertisseur transformant le courant alternatif produit par le stator 16 en courant continu, des moyens de commande recevant les informations des capteurs 76, et des moyens de régulation du courant d'excitation du bobinage de rotor 26. Ces moyens de régulation sont reliés électriquement à un dispositif porte-balais, non représenté, comprenant des balais en contact avec les bagues collectrices 62 portées par l'arbre central 12.

Ce dispositif porte-balais et le porte-capteurs 176 sont entourés par un capot de protection (non référencé à la figure 1) solidaire du palier arrière 40, ici à l'aide de goujons.

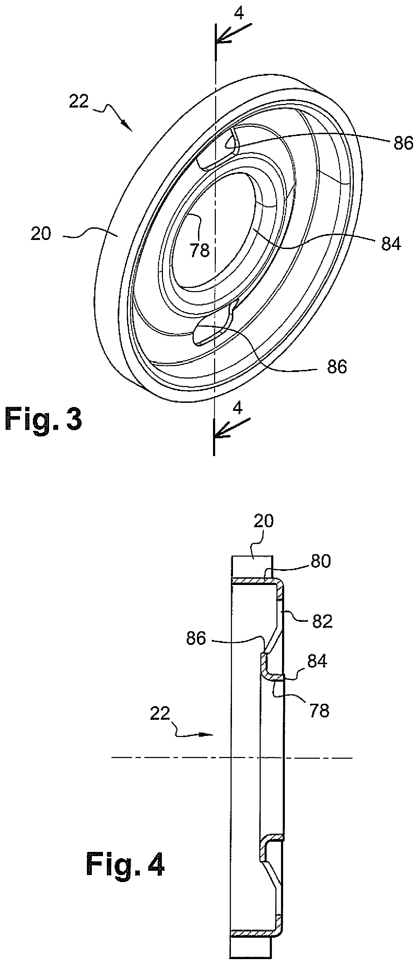

Comme représenté dans les figures 1 et 3, le porte-cible 22 se présente une coupelle qui est rapportée sur l'arbre central 12. Le porte-cible 22 est plus particulièrement réalisé en une seule pièce, par exemple par emboutissage d'une tôle métallique.

Il est de forme annulaire.

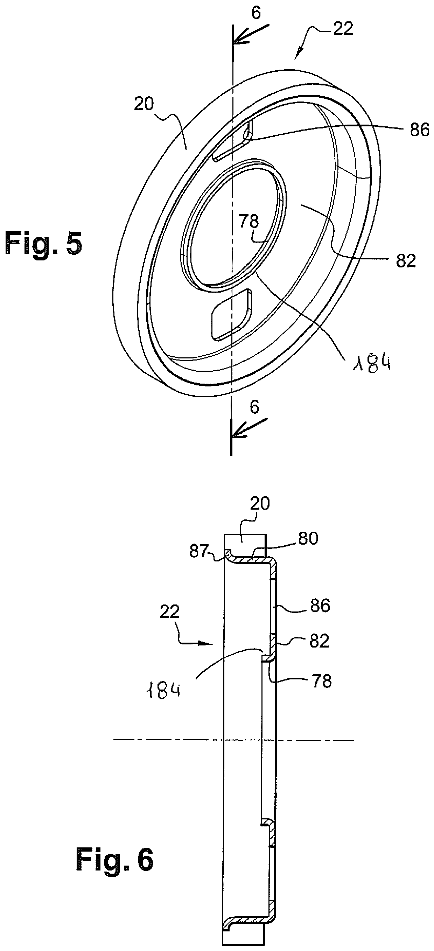

Il en est de même dans les autres modes de réalisation des figures 2, 5, 6-7, 8, 9.

Ce porte-cible 22, de forme annulaire, est de préférence réalisé en un matériau non magnétique. Il en est de même dans les autres modes de réalisation des figures 2, 5, 6-7, 8, 9

Le porte-cible 22 du premier mode de réalisation des figures 1, 3 et 4 est plus particulièrement conformé en un anneau radial qui entoure coaxialement l'arbre central 12 et qui est délimité d'une part, intérieurement par un alésage intérieur 78 et d'autre part, extérieurement par une jante 80 cylindrique d'orientation axiale, comme représenté à la figure 4.

Le porte-cible 22 comporte ainsi un voile radial 82 et, à sa périphérie extérieure, une jupe qui s'étend axialement vers l'arrière. La face extérieure de la jupe forme ainsi la jante 80 du porte-cible 22 et donc une face de support pour la cible 20. Ainsi, lorsque le porte-cible 22 est monté, la cible 20 s'étend radialement autour de l'extrémité avant de la douille 140 et de la bague extérieure 58 du roulement à billes arrière 54.

Le porte-cible 22 est monté solidaire en rotation de l'arbre central 12 axialement en arrière du rotor 14.

Le voile 82 est intercalé axialement entre l'anneau 68 et la face avant de la douille 140 et du roulement 54.

Le ventilateur arrière 50, de forme annulaire, et le porte-cible 22 sont ainsi réalisés en éléments indépendants. Le ventilateur arrière 50 est interposé axialement entre le porte-cible 22 et le rotor 14 en étant fixé de manière précitée sur le rotor 14.

Dans le premier mode de réalisation représenté aux figures 1, 3 et 4, l'alésage intérieur 78 du porte-cible 22 est monté serré sur un tronçon associé de l'arbre central 12 pour bloquer le porte-cible 22 en rotation par rapport à l'arbre central 12. Ce montage serré, permet aussi d'immobiliser axialement le porte-cible 22 par rapport à l'arbre central 12 dans des conditions normales d'utilisation.

Un tel montage permet de centrer précisément le porte-cible 22 sur l'arbre central 12 tout en permettant un montage aisé. La position de la cible 20 par rapport aux capteurs 76 est ainsi particulièrement précise.

Le porte-cible 22 est par exemple monté en force, via son alésage interne 78, sur l'arbre central 12 par frettage à froid, ou encore par frettage à chaud. En variante l'arbre central 12 comporte un tronçon moleté sur lequel est monté en force l'alésage interne du porte-cible.

Ces types de montage en force sont applicables aux autres modes de réalisation.

Ce montage est indépendant du ventilateur 50 et de la bague interne 56 du roulement 54, sans interférence avec le collecteur 64, notamment avec l'anneau de celui-ci. Il en est de même dans les autres exemples de réalisation.

Dans les exemples de réalisation des figures 1 et 2, le porte-cible 22 est monté sur le collet 37 de l'arbre central 12, axialement en arrière de l'anneau 68 et radialement à l'extérieur des bras 72 du collecteur 64. Plus précisément le porte-cible 22 est monté serré à force sur la périphérie externe de l'extrémité arrière du collet 37 entaillé pour passage des bras 72 du collecteur 64. Le diamètre du collet 37 est de manière précité supérieur à celui de la portée de roulement 59.

L'alésage intérieur 78 du porte-cible 22 est ainsi interposé axialement entre le rotor 14 et la bague intérieure 56 du palier de roulement à billes arrière 54, et l'anneau 68 du collecteur 64 est interposé axialement entre l'alésage intérieur 78 et le rotor 14.

L'alésage intérieur 78 est adjacent dans toutes les formes de réalisation à la face d'extrémité concernée du roulement 54, ici la face d'extrémité avant du roulement à billes 54.

Ainsi, selon une caractéristique, il est tiré partie de la présence du collet 37.

Dans le mode de réalisation suivant l'invention (figures 1, 3 et 4), le porte-cible 22 comporte un manchon 84 qui s'étend axialement vers l'avant depuis son alésage intérieur 78. Le porte-cible 22 présente ainsi une section radiale en forme de "S". Le manchon 84 est réalisé venu de matière avec le voile 82 du porte-cible 22.

Plus précisément le voile 82 est un voile de liaison entre le manchon 84 et la jante 80. Il comporte (figure 3 et 4) deux tronçons d'orientation radiale, respectivement externe et interne et un tronçon intermédiaire incliné intercalé entre les deux tronçons radiaux externe et interne reliés respectivement à la jante 80 et au manchon 84.

Le manchon 84 est dirigé vers le rotor 14, c'est-à-dire en direction opposée au roulement 54.

Ainsi, la face intérieure du manchon 84, délimitant l'alésage 78, est montée serrée autour du collet 37 de l'arbre 12 (figure 1), afin d'augmenter la surface de contact entre le porte-cible 22 et le collet 37. Le porte-cible 22 est ainsi fermement maintenu en position après son montage, notamment le porte-cible 22 est bloqué en pivotement autour d'un axe radial par rapport à l'arbre central 12.

Le voile 82 comporte en outre deux fenêtres 86 diamétralement opposées, qui sont destinées à être agencées en coïncidence avec les moyens de connexion 70 du collecteur 64 afin de permettre la fixation des fils d'extrémité 71 du bobinage de rotor 26 après le montage du porte-cible 22 sur l'arbre 12.

Selon les enseignements de l'invention, la cible 20 est réalisée en un élasto-aimant. Cette élasto-aimant comporte un corps en élastomère contenant des particules de matériau magnétiques, telles que des particules d'oxyde de fer magnétisées en final.

Plus particulièrement, la cible 20 se présente sous la forme d'un anneau en élasto-aimant qui entoure la jante 80 du porte-cible 22. La jante 80 du porte-cible 22 forme ainsi une face cylindrique, tournée vers l'extérieure, de support de la cible 20.

Au cours de son procédé de réalisation, la cible 20 en élasto-aimant subit une étape de vulcanisation. Cette étape est avantageusement réalisée une fois que la cible 20 est positionnée autour de la jante 80 du porte-cible 22.

Le procédé de vulcanisation des élastomères est bien connu. Il s'agit de faire réticuler l'élastomère, par exemple par chauffage, en présence de soufre. Dans le cas de l'élasto-aimant, les particules d'éléments magnétiques sont emprisonnées de manière homogène dans l'élastomère ainsi vulcanisé.

La vulcanisation crée une force d'adhésion entre la cible 20 et la face de support sur laquelle la cible 20 est positionnée pendant l'opération de vulcanisation. Ainsi la cible 20 est fixée sur le porte-cible 22 par vulcanisation.

Plus précisément, la cible 20 est réalisée selon un procédé comportant les étapes suivantes.

Lors d'une étape préalable de réalisation de la cible 20 en forme d'anneau, un mélange de matériau élastomère et de particules de matériau magnétique, tel que des particules d'oxyde de fer ou de la ferrite, est chauffé pour obtenir une cible 20 annulaire en matériau élastomère non réticulé.

Par exemple, on réalise un cylindre de diamètre intérieur égal au diamètre extérieur de la jante 80 du porte-cible 22. Puis, une tranche de ce cylindre est coupée pour obtenir la cible 20 annulaire de dimensions adéquates.

Puis la cible 20 ainsi formée est positionnée autour de la jante 80 du porte-cible 22, au contact de la jante 80.

Puis lors d'une étape de vulcanisation, la cible 20 ainsi formée, puis positionnée sur la jante 80 du porte-cible 22 est vulcanisée.

On magnétise la cible en final pour formation d'une pluralité de pôles Nord et Sud.

Comme particules magnétiques on peut également utiliser des ferrites et/ou des terres rares.

Avantageusement, lors d'une étape de préparation préalable à l'étape de vulcanisation, la jante 80 du porte-cible 22 est revêtue d'un primaire d'adhésion de manière à augmenter la force d'adhésion entre la cible 20 et la jante 80 du porte-cible 22.

La force d'adhésion créée par l'étape de vulcanisation permet de maintenir axialement en position la cible 20 sur le porte-cible 22 sans recourir à une face radiale de butée. Ainsi, la cible 20 est maintenue axialement en position uniquement par ladite force d'adhésion entre la jante 80 et la cible 20.

Le porte-cible 22 est ainsi plus simple et moins onéreux à fabriquer car la jante 80 n'est pas munie d'un rebord s'étendant radialement vers l'extérieur pour maintenir axialement la cible 20 comme c'est le cas pour des cibles connues réalisées selon l'état de la technique.

Selon un exemple de réalisation représenté aux figures 2, 5 et 6, le porte-cible 22 est réalisé de manière similaire à celui décrit précédemment. Ainsi, la cible 20 est réalisée et fixée sur la jante 80 de manière similaire au premier mode de réalisation.

Cependant, la jante 80 comporte ici un rebord 87 qui s'étend radialement vers l'extérieur depuis la jante pour renforcer le maintien axial de l'élasto-aimant.

De plus, le porte-cible 22 ne présente pas de manchon 84 mais un rebord annulaire d'orientation axiale 184 plus court axialement que le manchon 84 et dirigé axialement en sens inverse, c'est-à-dire vers le roulement 54 et à l'opposé du rotor 14. L'alésage 78, délimité par la face intérieure du rebord 184, est simplement courbé axialement vers l'avant de manière à faciliter le montage serré du porte-cible 22 sur le collet 37.

Le voile 82 est dans ce cas d'orientation radiale et relie la jante au rebord 184.

Le porte-cible 22 présente ainsi une section radiale très simple en forme de "U", le voile 82 étant sensiblement plan.

Cependant, la surface de contact entre le porte-cible 22 et l'arbre central 12 est inférieure à celle du premier mode de réalisation. La tenue mécanique d'un tel porte-cible 22 dépend donc des efforts qu'il est susceptible de rencontrer lors du fonctionnement de la machine électrique tournante 10.

Selon un exemple, qui est représenté aux figures 7 à 9, le porte-cible 22 comporte une face radiale d'arrêt 88, qui est agencée en butée axiale contre la face radiale d'extrémité arrière 33 en vis-à-vis du rotor 14, de manière à permettre un positionnement axial précis de la cible 20 par rapport au rotor 14.

Le porte-cible 22 présente une structure similaire à celle du porte-cible 22 du premier mode de réalisation. Ainsi, le pote-cible 22 présente une section radiale en forme de "S" comme représenté aux figures 7 et 9.

Cependant, le voile 82 du porte-cible 22 comporte une déformation annulaire en forme de goulotte coaxiale à l'alésage intérieur 78 qui s'étend axialement vers l'avant, amplifiant la courbure de la boucle extérieure du "S". La goulotte est ainsi délimitée radialement par une paroi axiale intérieure et une paroi axiale extérieure étagée avec la jupe 80.

Le fond 88 d'extrémité avant de cette déformation annulaire forme la face d'arrêt du porte-cible 22.

La paroi intérieure de la goulotte est agencée radialement à l'extérieur de l'anneau 68 du collecteur 64.

Comme représenté à la figure 7, le fond 88 est en butée axiale contre la face radiale d'extrémité arrière 33 de la roue polaire 24 arrière.

Avantageusement, le fond 88 présente une forme aplatie selon un plan radial, et le fond 88 est fixé, par exemple par soudage, à la face radiale d'extrémité arrière 33 de la roue polaire 24 arrière. Le porte-cible 22 est ainsi fixé au rotor 14 à la fois par serrage et par soudage. Cette fixation supplémentaire par soudage permet d'assurer l'immobilisation du porte-cible 22 par rapport au rotor 14.

Par rapport au mode de réalisation de la des figures 1, 3 et 4 on déforme le tronçon radial externe, tout en conservant le tronçon radial interne et le tronçon intermédiaire. On déforme le tronçon radial externe de liaison avec la jante 80 pour former la goulotte.

Comme dans les modes de réalisation précédents, le porte-cible 22 comporte deux fenêtres 86 qui s'étendent au moins en partie dans la paroi axiale intérieure de la goulotte pour permettre le passage des moyens de connexion 70 du collecteur 64 à l'intérieur de la goulotte lorsque le porte-cible 22 est monté sur l'arbre central 12.

Les fenêtres 86 assouplissent le voile 82.

Selon une variante non représentée de l'invention, qui est applicable à tous les modes de réalisations précédemment décrits, le porte-cible 22 comporte une patte qui s'étend radialement depuis son alésage intérieur 78 ou depuis son manchon 84 et qui est reçue radialement dans une rainure associée de l'arbre central 12 afin de permettre l'indexation angulaire du porte-cible 22 par rapport au rotor 14. La patte d'indexation est plus particulièrement agencée radialement au droit d'une fenêtre 86.

Le porte-cible 22 réalisé et agencé sur l'arbre central 12 selon les enseignements de l'invention est ainsi positionné sur l'arbre central 12 avec une très bonne concentricité.

De plus, un tel porte-cible 22 est particulièrement facile à monter sur l'arbre central 12 en une seule opération, par exemple par frettage.

De plus, un même porte-cible 22 réalisé selon les enseignements de l'invention est facilement adaptable à différentes conceptions et configurations de machines électriques tournantes.

Bien entendu la présente invention n'est pas limitée aux exemples de réalisation décrits.

Ainsi en variante le noyau 34 du rotor à griffes 14 est distinct des flasques 28 des roues polaires.

Des aimants permanents sont en variante montés entre au moins certaines griffes 30.

Le rotor en variante comporter deux rotors à griffes échelonnés axialement le long de l'arbre 12. La face avant du premier rotor porte le ventilateur avant, tandis que la face arrière du deuxième rotor porte le ventilateur arrière.

Le stator 16 est dans ce cas en une seule partie ou en variante en deux parties, chaque partie étant associé à l'un des rotors à griffes.

Le rotor est en variante un rotor à pôles saillants.

Ce rotor dans un mode de réalisation comporte une alternance de pôles saillants et d'aimants permanents.

Le carter 36 peut comporter plus de deux parties. Par exemple il comporte un palier avant, un palier arrière et une partie intermédiaire portant intérieurement le stator.

Le palier arrière de l'alterno-démarreur peut porter également des composants électroniques de puissance. Ces composants appartiennent par exemple à plusieurs modules montés par exemple sur une mezzanine implantée au dessus du palier arrière comme décrit dans le document WO 2004/040738.

On peut inverser les structures comme décrit dans le document WO-A- 01/69.762 précité. Ainsi en variante le porte cible est implanté à l'avant de la machine au niveau de la face avant de la roue polaire avant 24 et du palier avant 38.

Dans ce cas on tire partie de l'entretoise (non référencée à la figure 1) implantée entre la face avant de la roue polaire avant 24 et la face arrière de la bague interne tournante du roulement avant 52. Cette entretoise est solidaire en rotation de l'arbre 12 via l'extrémité avant du tronçon strié avant 32. L'alésage intérieur 78 du porte-cible 22 est alors monté serré sur la périphérie externe de l'entretoise constituant alors le tronçon associé de l'arbre 12.

Dans un mode de réalisation le ventilateur avant est supprimé ce qui permet une implantation plus aisée du porte-cible 22.

L'un des paliers 38, 40 est en variante refroidi par une circulation de liquide en sorte que l'un des ventilateurs 48, 50 est supprimé, l'autre étant équipé du porte-cible.

Le ventilateur 50, 48, peut être avantageusement entièrement métallique pour mieux évacuer la chaleur. En variante il est en une autre matière. En variante une première partie des pales provient du flasque métallique du ventilateur et l'autre partie des pales est en matière plastique surmoulée sur la première partie.
Les pales du ventilateur peuvent être de forme quelconque.

Par exemple elles peuvent être inclinées axialement.

D'une manière générale le ventilateur peut être à action axiale, du type centrifuge ou du type centripète.

Grâce à l'invention on diminue les risques de chocs sur la ligne d'assemblage car le porte- cible peut être équilibré par avance en rotation pour éliminer les balourds dus aux phénomènes de force centrifuge et être monté après l'équilibrage en rotation de l'ensemble rotor ventilateur.

Grâce à l'invention on obtient une bonne concentricité de la cible par rapport au ventilateur centré sur l'arbre et donc par rapport à l'arbre.

Le ventilateur est en variante un ventilateur double, c'est-à-dire comportant deux ventilateurs superposés pour augmenter le nombre de pales comme décrit par exemple dans le document WO 2004/106748. Bien entendu le nombre de ventilateurs superposés est en variante supérieur à deux.

Dans ce document on voit également les plots de soudage pour fixer de manière précitée le ventilateur par soudage sur le rotor.

La lecture de la cible est en variante axiale, comme mentionné dans le document WO-A- 01/69.762.

Cela est favorisé du fait que le porte-cible 22 est en dans un mode de réalisation dépourvu de rebord au niveau de sa jante 80.

Ainsi qu'il ressort de la description l'élasto-aimant exerce une force de serrage sur la face 80 de la jante. Cette force est répercutée via le voile 82 à la périphérie interne du porte-cible (le manchon 84 ou le rebord 184) et contribue à mainternir le serrage du porte-cible sur le tronçon 37de l'arbre 12, constitué par le collet de celui-ci.

Le diamètre de ce collet est globalement égal à celui de la périphérie externe de la bague interne 56 du roulement 54.

L'invention est applicable aux modes de réalisations du document WO 01/69762. Ainsi la cible peut être montée sur le ventilateur.

L'invention est applicable également au mode de réalisation du document FR A 2 884 367.

## Revendications

1. Machine électrique tournante (10), notamment pour un alterno-démarreur de véhicule automobile, qui comporte :
- un carter fixe (36)
- un arbre central (12) monté rotatif autour de son axe (B) dans le carter (36) fixe ;
- un rotor (14) porté à solidarisation par l'arbre central (12) ;
- un porte-cible (22) qui est monté solidaire en rotation de l'arbre central (12) et qui comporte une face cylindrique extérieure de support (80) appartenant à une jante d'orientation axiale et un voile (82) de liaison entre le manchon (78) et la jante (80),
- au moins une cible (20) réalisée en un matériau magnétique et qui est fixée à la face de support (80) du porte-cible (22) ;
au moins un capteur (76) porté par le carter (36) et associé à la cible (20) pour déterminer la position angulaire du rotor (14),
le porte-cible (22) est réalisé en une seule pièce et présente un alésage interne (78) délimité par un manchon (84), en ce que le voile (82) de liaison entre le manchon (84) et la jante (80) comporte un tronçon radial externe reliée à la jante (80), un tronçon radial interne relié au manchon (84) et un tronçon intermédiaire incliné intercalé entre les tronçons radiaux externe et interne, **caractérisé en ce que** la cible (20) est réalisée en élasto-aimant et **en ce que** l'alésage interne (78) du porte-cible (22) est monté serré sur un collet (37) associé de l'arbre (12) pour bloquer le porte-cible (22) en rotation et axialement par rapport à l'arbre (12), l'extrémité libre dudit manchon (84) étant dirigé vers le rotor.

2. Machine (10) selon la revendication précédente, **caractérisée en ce que** la cible (20) en élasto-aimant est fixée sur le porte-cible (22) par vulcanisation, la vulcanisation créant une force d'adhésion entre la cible (20) et la face extérieure de support (80) sur laquelle la cible (20) est fixée.

3. Machine (10) selon la revendication précédente, **caractérisée en ce que** la cible (20) est conformée en un anneau de diamètre intérieur égal au diamètre extérieure de la face cylindrique extérieure de support (80) du porte-cible (22), la cible (20) entourant la face cylindrique extérieure de support (80) du porte-cible (22).

4. Machine (10) selon la revendication précédente, **caractérisée en ce que** la cible (22) est maintenue axialement en position sur le porte-cible (22) uniquement par ladite force d'adhésion entre la face extérieure de support (80) et la cible (20).

5. Machine (10) selon l'une quelconque des revendications précédentes, **caractérisée en ce que** le porte-cible (22) est formé par une coupelle présentant une section radiale en forme de S délimitée extérieurement par la jante (80) et intérieurement par le manchon (84).

6. Machine (10) selon l'une quelconque des revendications précédentes, **caractérisé en ce que** le porte-cible (22) comporte une patte qui s'étend radialement depuis son alésage intérieur et qui est reçue radialement dans une rainure associée de l'arbre (12) pour permettre l'indexation angulaire du porte-cible (22) par rapport au rotor (14).

7. Machine (10) selon l'une quelconque des revendications précédentes, **caractérisée en ce que** le tronçon de l'arbre (37) est un collet entaillé pour le passage de bras (72) raccordées à un anneau (68) appartenant à un collecteur (64) et **en ce que** l'anneau (68) du collecteur (64) est interposé axialement entre l'alésage interne (78) du porte-cible (22) et le rotor (14).

8. Machine (10) selon l'une quelconque des revendications précédentes, **caractérisée en ce que** le porte-cible (22) est monté en force sur le tronçon (37) de l'arbre (12) par frettage.

9. Procédé de réalisation d'une machine électrique tournante (10) selon l'une quelconque des revendications précédentes, **caractérisé en ce qu'**il comporte :
- une étape préalable de réalisation de la cible (20) en forme d'anneau par chauffage d'un mélange de matériau élastomère non réticulé et de particules de matériau magnétique, telles que de la ferrite ;
- puis une étape de vulcanisation de la cible (20) ainsi formée et positionnée sur la face de support (80) du porte-cible (22).

10. Procédé selon la revendication précédente, **caractérisé en ce que** lors d'une étape de préparation préalable à l'étape de vulcanisation, la face cylindrique extérieure de support (80) du porte-cible (20) est revêtue d'un primaire d'adhésion.

## Patentansprüche

1. Drehende elektrische Maschine (10), insbesondere für einen Starter/Generator für Kraftfahrzeuge, die Folgendes umfasst:
- ein festes Gehäuse (36);
- eine Mittelwelle (12), die drehbar um ihre Achse (B) in dem festen Gehäuse (36) montiert ist;
- einen Rotor (14), der mit der Mittelwelle (12) fest verbunden ist und von ihr getragen wird;
- einen Zielträger (22), der an der Mittelwelle (12) drehfest montiert ist und eine äußere zylindrische Trägerfläche (80), die zu einer Felge mit axialer Orientierung gehört, und eine Verbindungsabdeckung (82) zwischen der Muffe (78) und der Felge (80) aufweist,
- wenigstens ein Ziel (20), das aus einem magnetischen Material hergestellt ist und das an der Trägerfläche (80) des Zielträgers (22) befestigt ist;
wenigstens einen Sensor (76), der von dem Gehäuse (36) getragen wird und dem Ziel (20) zugeordnet ist, um die Winkelposition des Rotors (14) zu bestimmen,
wobei der Zielträger (22) einteilig ausgebildet ist und eine Innenbohrung (78) aufweist, die durch eine Muffe (84) begrenzt ist, und die Verbindungsabdeckung (82) zwischen der Muffe (84) und der Felge (80) ein äußeres radiales Teilstück, das mit der Felge (80) verbunden ist, ein inneres radiales Teilstück, das mit der Muffe (84) verbunden ist, und ein geneigtes Zwischenteilstück, das zwischen das äußere und das innere radiale Teilstück eingefügt ist, aufweist, **dadurch gekennzeichnet, dass** das Ziel (20) aus einem Elastomagneten hergestellt ist und dass die Innenbohrung (78) des Zielträgers (22) an einem Bund (27), der der Welle (12) zugeordnet ist, festgeklemmt montiert ist, um den Zielträger (22) in Bezug auf die Welle (12) rotatorisch und axial zu blockieren,
wobei das freie Ende der Muffe (84) zum Rotor weist.

2. Maschine (10) nach dem vorhergehenden Anspruch, **dadurch gekennzeichnet, dass** das Ziel (20) als ein Elastomagnet an dem Zielträger (22) durch Vulkanisierung befestigt ist, wobei die Vulkanisierung eine Haftungskraft zwischen dem Ziel (20) und der äußeren Fläche des Trägers (80), an der das Ziel (20) befestigt ist, erzeugt.

3. Maschine (10) nach dem vorhergehenden Anspruch, **dadurch gekennzeichnet, dass** das Ziel (20) die Form eines Rings mit einem Innendurchmesser, der gleich dem Außendurchmesser der äußeren zylindrischen Trägerfläche (80) des Zielträgers (22) ist, hat, wobei das Ziel (20) die äußere zylindrische Trägerfläche (80) des Zielträgers (22) umgibt.

4. Maschine (10) nach dem vorhergehenden Anspruch, **dadurch gekennzeichnet, dass** das Ziel (22) axial an seiner Position an dem Zielträger (22) ausschließlich durch die Haftungskraft zwischen der äußeren Trägerfläche (80) und dem Ziel (20) gehalten wird.

5. Maschine (10) nach einem der vorhergehenden Ansprüche, **dadurch gekennzeichnet, dass** der Zielträger (22) durch eine Schale gebildet ist, die einen radialen Querschnitt in S-Form aufweist, der außen durch die Felge (80) und innen durch die Muffe (84) begrenzt ist.

6. Maschine (10) nach einem der vorhergehenden Ansprüche, **dadurch gekennzeichnet, dass** der Zielträger (22) eine Lasche aufweist, die sich radial von seiner Innenbohrung erstreckt und die radial in einer der Welle (12) zugeordneten Rille aufgenommen ist, um die Winkelindexierung des Zielträgers (22) in Bezug auf den Rotor (14) zu ermöglichen.

7. Maschine nach einem der vorhergehenden Ansprüche, **dadurch gekennzeichnet, dass** das Wellenteilstück (37) ein eingeschnürter Bund für die Vorbeibewegung von Armen (72), die mit einem zu einem Kollektor (64) gehörenden Ring (68) verbunden sind, ist und dass der Ring (68) des Kollektors (64) axial zwischen die Innenbohrung (78) des Zielträgers (22) und den Rotor (14) eingefügt ist.

8. Maschine (10) nach einem der vorhergehenden Ansprüche, **dadurch gekennzeichnet, dass** der Zielträger (22) an dem Teilstück (37) der Welle (12) durch Frettieren fest montiert ist.

9. Verfahren zum Herstellen einer drehenden elektrischen Maschine (10) nach einem der vorhergehenden Ansprüche, **dadurch gekennzeichnet, dass** es Folgendes umfasst:
- einen vorausgehenden Schritt des Herstellens des Ziels (20) in Form eines Rings durch Erwärmen eines Gemisches eines nicht vernetzten Elastomermaterials und von Partikeln aus magnetischem Material wie etwa Ferrit;
- dann einen Schritt des Vulkanisierens des somit gebildeten und auf der Trägerfläche (80) des Zielträgers (22) positionierten Ziels.

10. Verfahren nach dem vorhergehenden Anspruch, **dadurch gekennzeichnet, dass** in einem dem Vulkanisierungsschritt vorausgehenden Vorbereitungsschritt die äußere zylindrische Trägerfläche (80) des Zielträgers (20) mit einem Haftgrund beschichtet wird.

## Claims

1. Rotating electrical machine (10), in particular for an alternator-starter of a motor vehicle, which comprises:
- a fixed casing (36)
- a central shaft (12) mounted to rotate about its axis (B) in the fixed casing (36);
- a rotor (14) borne with friction-type connection by the central shaft (12);
- a target-holder (22) which is mounted secured in rotation to the central shaft (12) and which comprises a cylindrical outer support face (80) belonging to a rim of axial orientation and a linking web (82) between the sleeve (78) and the rim (80),
- at least one target (20) produced in a magnetic material and which is fixed to the support face (80) of the target-holder (22);
at least one sensor (76) borne by the casing (36) and associated with the target (20) for determining the angular position of the rotor (14),
the target-holder (22) is produced in a single piece and has an internal bore (78) delimited by a sleeve (84), in that the linking web (82) between the sleeve (84) and the rim (80) comprises an outer radial section linked to the rim (80), an inner radial section linked to the sleeve (84) and an inclined intermediate section inserted between the outer and inner radial sections, **characterized in that** the target (20) is produced in elasto-magnetic material and **in that** the internal bore (78) of the target-holder (22) is tightly mounted on a thrust collar (37) associated with the shaft (12) to block the target-holder (22) in rotation and axially relative to the shaft (12),
the free end of said sleeve (84), being directed towards the rotor.

2. Machine (10) according to the preceding claim, **characterized in that** the target (20) of elasto-magnetic material is fixed onto the target-holder (22) by vulcanization, the vulcanization creating an adhesion force between the target (20) and the outer support face (80) on which the target (20) is fixed.

3. Machine (10) according to the preceding claim, **characterized in that** the target (20) is shaped as a ring of inner diameter equal to the outer diameter of the cylindrical outer support face (80) of the target-holder (22), the target (20) encircling the cylindrical outer support face (80) of the target-holder (22).

4. Machine (10) according to the preceding claim, **characterized in that** the target (22) is held axially in position on the target-holder (22) only by said adhesion force between the outer support face (80) and the target (20).

5. Machine (10) according to any one of the preceding claims, **characterized in that** the target-holder (22) is formed by a shell having an S-shaped radial section delimited externally by the rim (80) and internally by the sleeve (84).

6. Machine (10) according to any one of the preceding claims, **characterized in that** the target-holder (22) comprises a tab which extends radially from its internal bore and which is received radially in a groove associated with the shaft (12) to allow the angular indexing of the target-holder (22) relative to the rotor (14).

7. Machine (10) according to any one of the preceding claims, **characterized in that** the section of the shaft (37) is a thrust collar notched for the passage of arms (72) connected to a ring (68) belonging to a commutator (64) and **in that** the ring (68) of the commutator (64) is interposed axially between the internal bore (78) of the target-holder (22) and the rotor (14).

8. Machine (10) according to any one of the preceding claims, **characterized in that** the target-holder (22) is force fitted onto the section (37) of the shaft (12) by shrinking.

9. Method for producing a rotating electrical machine (10) according to any one of the preceding claims, **characterized in that** it comprises:
- a preliminary step of production of the target (20) in the form of a ring by heating of a mixture of non-crosslinked elastomer material and of particles of magnetic material, such as ferrite;
- then a step of vulcanization of the target (20) thus formed and positioned on the support face (80) of the target-holder (22).

10. Method according to the preceding claim, **characterized in that**, in a preparation step prior to the vulcanization step, the cylindrical outer support face (80) of the target-holder (20) is coated with an adhesion primer.
